# EUROPEAN PATENT APPLICATION

(11) **EP 4 822 549 A1**
(43) Date of publication of application: **14.10.2026**
(21) Application number: 24911097.4
(22) Date of filing: 24.12.2024
(51) Int. Cl.: G06F 13/16

(54) **COMMUNICATION METHOD AND APPARATUS, COMPUTING DEVICE, AND STORAGE MEDIUM**

(30) Priority: 27.12.2023 CN 202311832397
(71) Applicant: Huawei Technologies Co., Ltd., Shenzhen, Guangdong 518129 (CN)
(72) Inventor: SONG, Dongkuang, Shenzhen, Guangdong 518129 (CN); LI, Peicong, Shenzhen, Guangdong 518129 (CN); XU, Wei, Shenzhen, Guangdong 518129 (CN)
(74) Representative: Goddar, Heinz J.
(86) International application number: PCT/CN2024/141755
(87) International publication number: WO 2025/140172

(57) **Abstract**

Disclosed are a communication method, a communication apparatus, a compute device, and a computer-readable storage medium. The communication method is applied to a plurality of communication parties having a shared storage space, the communication method is performed by a sender among the plurality of communication parties, and the plurality of communication parties further include a receiver. The method includes: sending a message to a virtual bus, so that the receiver receives the message through the virtual bus, processes the message, and returns a processing result of the message to the virtual bus, where the virtual bus is implemented based on the shared storage space; and receiving the processing result through the virtual bus. This application can reduce occupancy of a shared space between communication parties and improve communication efficiency.

## Description

This application claims priority to Chinese Patent Application No. 202311832397.6, filed with the China National Intellectual Property Administration on December 27, 2023 and entitled "COMMUNICATION METHOD AND APPARATUS, COMPUTE DEVICE, AND STORAGE MEDIUM", which is incorporated herein by reference in its entirety.

### TECHNICAL FIELD

This application relates to the computer field, and in particular, to a communication method, a communication apparatus, a compute device, and a computer-readable storage medium.

### BACKGROUND

In the art, there are technologies that enable communication among a plurality of systems having a shared storage space (a plurality of chips, a plurality of cores in a chip, a processor and a peripheral, or the like). Current communication technologies occupy a relatively large amount of the large shared space, resulting in low communication efficiency. In addition, the existing communication technologies suffer from inconvenient communication solutions, and the addition and removal of communication parties are relatively cumbersome. Therefore, there is an urgent need in the art for a technology capable of improving communication efficiency among a plurality of communication parties having a shared space, reducing occupancy of the shared space and enabling convenient and efficient communication.

### SUMMARY

In view of this, this application is dedicated to providing a communication method, a communication apparatus, a compute device, and a computer-readable storage medium, to reduce occupancy of a shared space between communication parties and improve communication efficiency.

According to one aspect, this application provides a communication method, applied to a plurality of communication parties having a shared storage space. The communication method is performed by a sender among the plurality of communication parties, and the plurality of communication parties further include a receiver. The method includes: sending a message to a virtual bus, so that the receiver receives the message through the virtual bus, processes the message, and returns a processing result of the message to the virtual bus, where the virtual bus is implemented based on the shared storage space; and receiving the processing result through the virtual bus.

According to this aspect, the shared storage space is set in a form of the virtual bus, so that the communication parties communicate with each other in a bus manner, thereby making communication between the communication parties more convenient and efficient. In addition, it is easier to add or delete a communication party on the bus, and this can be implemented without simultaneously upgrading all communication parties. Therefore, a problem in the conventional technology is resolved.

In a particular embodiment of this application, the virtual bus includes a plurality of windows, and the plurality of windows are obtained by dividing the shared storage space; and sending the message to the virtual bus includes: sending the message to a first window among the plurality of windows, so that the receiver obtains the message via the first window.

According to this embodiment, the shared storage space is divided into the plurality of windows, so that the sender can use any window to send the message, and the receiver can obtain information in a target window in a polling manner. This simplifies a communication procedure and is more convenient and efficient than point-to-point communication.

In a particular embodiment of this application, sending the message to the first window among the plurality of windows includes: occupying the first window; writing receiver information and a parameter of the message into the first window; and releasing the first window.

According to this embodiment, a process of sending the message includes occupancy, writing, and release of the window, so that the sender of the message does not need to directly establish a connection or a channel with the receiver, and as long as there is an idle window, the message can be successfully sent. The receiver only needs to wait for the polled target window, and the sender does not need to pay attention to behavior of the receiver, so that a communication manner is smoother and more efficient.

In a particular embodiment of this application, occupying the first window includes: S1: reading a status of the first window; S2: confirming that an occupancy field of the first window has not been written with information; S3: writing an ID of the sender into the occupancy field; S4: reading the status of the first window again; and S5: when confirming that the information in the occupancy field is the ID of the sender, occupancy is successful, where a delay of S1 to S3 is less than a delay of S4 to S5.

According to this embodiment, the delay of steps 1 to 3 is less than the delay of steps 4 to 5, so that a case in which both of two communication parties that attempt to occupy a same window succeed in occupying the window can be avoided. This effectively avoids a possible error in communication.

In a particular embodiment of this application, occupying the first window includes: writing an ID of the sender into an occupancy address of the first window.

According to this embodiment, the occupancy address is set in the window, so that both an address used to write the ID of the sender when the sender occupies the window in a software manner and an address used to write the ID of the sender when the sender occupies the window in a hardware manner can be mapped to the occupancy address. In this way, the receiver can read corresponding occupancy information at the occupancy address without distinguishing whether the sender occupies the window in the software manner or the hardware manner, and can know that the window has been occupied when seeing that the occupancy address has been written. This provides a more efficient window occupancy manner.

In a special embodiment of this application, writing the receiver information and the parameter of the message into the first window includes: writing the parameter of the message into a dedicated buffer of the first window, where the dedicated buffer is used by the receiver to read the parameter of the message.

According to this embodiment, the parameter of the message is stored in the dedicated buffer, so that it can be avoided that all information related to the parameter is exposed in the window, and parameters to be written and read can be limited to some extent.

In a special embodiment of this application, the virtual bus includes a plurality of windows, and the plurality of windows are obtained by dividing the shared storage space; and the method further includes: occupying a first window among the plurality of windows; writing a parameter of a target function into the first window, so that the receiver obtains the parameter of the target function via the first window, determines and executes the target function, and returns execution result information to the first window; and reading the execution result information from the first window.

According to this embodiment, the sender can invoke a specific function of the receiver. In the virtual bus manner of this application, a process of implementing function invoking is simpler and more convenient.

In a particular embodiment of this application, the virtual bus includes a plurality of windows, and the plurality of windows are obtained by dividing the shared storage space; and the method further includes: occupying a first window among the plurality of windows; and writing report information and a parameter of the report information into the first window, so that the receiver obtains the report information and the parameter via the first window, determines a processing program based on the parameter, and processes the report information by using the processing program.

According to this embodiment, the sender can report information to the receiver. The information is reported in the virtual bus manner, so that a reporting procedure can be simplified, and information reporting and processing can be efficiently completed.

In a particular embodiment of this application, the plurality of communication parties further include a third communication party, and the method further includes: connecting the third communication party to the virtual bus, to allow the third communication party to communicate with the sender and the receiver.

According to this embodiment, to implement joining of the third communication party, the third communication party only needs to be connected to the virtual bus, and another communication party does not need to be upgraded or modified. This greatly simplifies a problem of joining of a new communication party.

In a particular embodiment of this application, the plurality of communication parties further include a third communication party, the third communication party communicates with the sender and the receiver through the virtual bus, and the method further includes: stopping operation of the third communication party, so that the third communication party no longer communicates with the sender and the receiver through the virtual bus; or updating or rebooting the third communication party, so that the updated or rebooted third communication party communicates with the sender and the receiver through the virtual bus.

According to this embodiment, to implement deletion, update, or rebooting of the third communication party, only a corresponding operation needs to be performed on the third communication party itself, and no modification needs to be made to the virtual bus or another communication party. This greatly improves scalability of a communication solution in this application and facilitates a communication requirement.

In a special embodiment of this application, the plurality of communication parties further include a third communication party, the virtual bus includes a first virtual bus and a second virtual bus, the sender communicates with the receiver through the first virtual bus, and the sender or the receiver communicates with the third communication party through the second virtual bus.

According to this embodiment, through a plurality of virtual buses, information exchange between communication parties that do not have (or are inconvenient to set) a shared storage space can be implemented.

In a special embodiment of this application, when the sender communicates with the third communication party through the second virtual bus, the sender is provided with a proxy module, to allow the third communication party to communicate with the receiver via the sender; and when the receiver communicates with the third communication party through the second virtual bus, the receiver is provided with a proxy module, to allow the third communication party to communicate with the sender via the receiver.

According to this embodiment, the proxy module is disposed, so that communication across virtual buses can be implemented. This enhances scalability of a communication technical solution of this application, and allows more other forms of communication parties to join a communication channel, thereby facilitating implementation of various communication requirements.

According to another aspect, this application provides a communication method, applied to a plurality of communication parties having a shared storage space. The communication method is performed by a receiver among the plurality of communication parties, and the plurality of communication parties further include a sender. The method includes: receiving a message from a virtual bus and processing the message, where the message is sent by the sender to the virtual bus, and the virtual bus is implemented based on the shared storage space; and returning a processing result of the message to the virtual bus.

In a particular embodiment of this application, the virtual bus includes a plurality of windows, and the plurality of windows are obtained by dividing the shared storage space; and receiving the message from the virtual bus and processing the message includes: polling the plurality of windows, and obtaining the message when polling a first window among the plurality of windows, where the sender sends the message to the first window.

In a special embodiment of this application, polling the plurality of windows, and obtaining the message when polling the first window among the plurality of windows includes: when receiver information in the polled first window is information about the receiver, reading a parameter of the message, where the receiver information and the parameter of the message are written by the sender into the window; and obtaining the message based on the parameter.

In a special embodiment of this application, polling the plurality of windows, and obtaining the message when polling the first window among the plurality of windows includes: when receiver information in the polled first window is information about the receiver, reading a parameter of the message from a dedicated buffer of the first window, where the parameter of the message is written by the sender into the dedicated buffer; and obtaining the message based on the parameter.

In a particular embodiment of this application, the virtual bus includes a plurality of windows, and the plurality of windows are obtained by dividing the shared storage space; and the method further includes: obtaining a parameter of a target function via a first window among the plurality of windows, where the sender writes the parameter of the target function into the first window; determining and executing the target function based on the parameter of the target function; and returning execution result information to the first window, so that the sender reads the execution result information from the first window.

In a particular embodiment of this application, the virtual bus includes a plurality of windows, and the plurality of windows are obtained by dividing the shared storage space; and the method further includes: obtaining report information and a parameter of the report information via a first window among the plurality of windows, where the sender writes the report information and the parameter into the first window; determining a processing program based on the parameter; and processing the report information by using the processing program.

In a particular embodiment of this application, the plurality of communication parties further include a third communication party, and the method further includes: connecting the third communication party to the virtual bus, to allow the third communication party to communicate with the sender and the receiver.

In a particular embodiment of this application, the plurality of communication parties further include a third communication party, the third communication party communicates with the sender and the receiver through the virtual bus, and the method further includes: stopping operation of the third communication party, so that the third communication party no longer communicates with the sender and the receiver through the virtual bus; or updating or rebooting the third communication party, so that the updated or rebooted third communication party communicates with the sender and the receiver through the virtual bus.

In a special embodiment of this application, the plurality of communication parties further include a third communication party, the virtual bus includes a first virtual bus and a second virtual bus, the sender communicates with the receiver through the first virtual bus, and the sender or the receiver communicates with the third communication party through the second virtual bus.

In a special embodiment of this application, when the sender communicates with the third communication party through the second virtual bus, the sender is provided with a proxy module, to allow the third communication party to communicate with the receiver via the sender; and when the receiver communicates with the third communication party through the second virtual bus, the receiver is provided with a proxy module, to allow the third communication party to communicate with the sender via the receiver.

According to another aspect, this application provides a communication apparatus, applied to a plurality of communication parties having a shared storage space. The communication apparatus is disposed in a sender among the plurality of communication parties, and the plurality of communication parties further include a receiver. The apparatus includes: a sending module, configured to send a message to a virtual bus, so that the receiver receives the message through the virtual bus, processes the message, and returns a processing result of the message to the virtual bus, where the virtual bus is implemented based on the shared storage space; and a receiving module, configured to receive the processing result through the virtual bus.

In a particular embodiment of this application, the virtual bus includes a plurality of windows, and the plurality of windows are obtained by dividing the shared storage space. The sending module is further configured to send the message to a first window among the plurality of windows, so that the receiver obtains the message via the first window.

In a particular embodiment of this application, the sending module is further configured to: occupy the first window; write receiver information and a parameter of the message into the first window; and release the first window.

In a particular embodiment of this application, the sending module is further configured to: S1: read a status of the first window; S2: confirm that an occupancy field of the first window has not been written with information; S3: write an ID of the sender into the occupancy field; S4: read the status of the first window again; and S5: when confirming that the information in the occupancy field is the ID of the sender, occupancy is successful, where a delay of S1 to S3 is less than a delay of S4 to S5.

In a particular embodiment of this application, the sending module is further configured to write an ID of the sender into an occupancy address of the first window.

In a particular embodiment of this application, the sending module is further configured to write the parameter of the message into a dedicated buffer of the first window, where the dedicated buffer is used by the receiver to read the parameter of the message.

In a particular embodiment of this application, the virtual bus includes a plurality of windows, and the plurality of windows are obtained by dividing the shared storage space. The apparatus is further configured to: occupy a first window among the plurality of windows; write a parameter of a target function into the first window, so that the receiver obtains the parameter of the target function via the first window, determines and executes the target function, and returns execution result information to the first window; and read the execution result information from the first window.

In a particular embodiment of this application, the virtual bus includes a plurality of windows, and the plurality of windows are obtained by dividing the shared storage space. The apparatus is further configured to: occupy a first window among the plurality of windows; and write report information and a parameter of the report information into the first window, so that the receiver obtains the report information and the parameter via the first window, determines a processing program based on the parameter, and processes the report information by using the processing program.

In a particular embodiment of this application, the plurality of communication parties further include a third communication party, and the apparatus is further configured to connect the third communication party to the virtual bus, to allow the third communication party to communicate with the sender and the receiver.

In a particular embodiment of this application, the plurality of communication parties further include a third communication party, the third communication party communicates with the sender and the receiver through the virtual bus, and the apparatus is further configured to: stop operation of the third communication party, so that the third communication party no longer communicates with the sender and the receiver through the virtual bus; or update or reboot the third communication party, so that the updated or rebooted third communication party communicates with the sender and the receiver through the virtual bus.

In a special embodiment of this application, the plurality of communication parties further include a third communication party, the virtual bus includes a first virtual bus and a second virtual bus, the sender communicates with the receiver through the first virtual bus, and the sender or the receiver communicates with the third communication party through the second virtual bus.

In a special embodiment of this application, when the sender communicates with the third communication party through the second virtual bus, the sender is provided with a proxy module, to allow the third communication party to communicate with the receiver via the sender; and when the receiver communicates with the third communication party through the second virtual bus, the receiver is provided with a proxy module, to allow the third communication party to communicate with the sender via the receiver.

According to another aspect, this application further provides a communication apparatus, applied to a plurality of communication parties having a shared storage space. The communication apparatus is disposed in a receiver among the plurality of communication parties, and the plurality of communication parties further include a sender. The apparatus includes: a receiving module, configured to receive a message from a virtual bus and process the message, where the message is sent by the sender to the virtual bus, and the virtual bus is implemented based on the shared storage space; and a returning module, configured to return a processing result of the message to the virtual bus.

In a particular embodiment of this application, the virtual bus includes a plurality of windows, and the plurality of windows are obtained by dividing the shared storage space. The receiving module is further configured to: poll the plurality of windows, and obtain the message when polling a first window among the plurality of windows, where the sender sends the message to the first window.

In a special embodiment of this application, the receiving module is further configured to: when receiver information in the polled first window is information about the receiver, read a parameter of the message, where the receiver information and the parameter of the message are written by the sender into the window; and obtain the message based on the parameter.

In a special embodiment of this application, the receiving module is further configured to: when receiver information in the polled first window is information about the receiver, read a parameter of the message from a dedicated buffer of the first window, where the parameter of the message is written by the sender into the dedicated buffer; and obtain the message based on the parameter.

In a particular embodiment of this application, the virtual bus includes a plurality of windows, and the plurality of windows are obtained by dividing shared storage space. The apparatus is further configured to: obtain a parameter of a target function via a first window among the plurality of windows, where the sender writes the parameter of the target function into the first window; determine and execute the target function based on the parameter of the target function; and return execution result information to the first window, so that the sender reads the execution result information from the first window.

In a particular embodiment of this application, the virtual bus includes a plurality of windows, and the plurality of windows are obtained by dividing the shared storage space. The apparatus is further configured to: obtain report information and a parameter of the report information via a first window among the plurality of windows, where the sender writes the report information and the parameter into the first window; determine a processing program based on the parameter; and process the report information by using the processing program.

In a particular embodiment of this application, the plurality of communication parties further include a third communication party, and the apparatus is further configured to connect the third communication party to the virtual bus, to allow the third communication party to communicate with the sender and the receiver.

In a particular embodiment of this application, the plurality of communication parties further include a third communication party, the third communication party communicates with the sender and the receiver through the virtual bus, and the apparatus is further configured to: stop operation of the third communication party, so that the third communication party no longer communicates with the sender and the receiver through the virtual bus; or update or reboot the third communication party, so that the updated or rebooted third communication party communicates with the sender and the receiver through the virtual bus.

In a special embodiment of this application, the plurality of communication parties further include a third communication party, the virtual bus includes a first virtual bus and a second virtual bus, the sender communicates with the receiver through the first virtual bus, and the sender or the receiver communicates with the third communication party through the second virtual bus.

In a special embodiment of this application, when the sender communicates with the third communication party through the second virtual bus, the sender is provided with a proxy module, to allow the third communication party to communicate with the receiver via the sender; and when the receiver communicates with the third communication party through the second virtual bus, the receiver is provided with a proxy module, to allow the third communication party to communicate with the sender via the receiver.

According to another aspect, this application provides a computer program product, including program code. When a computer runs the computer program product, the computer is enabled to implement the foregoing communication method.

Any one of the communication apparatus, the compute device, the computer-readable storage medium, or the computer program product provided above is configured to perform the communication method provided above. Therefore, for beneficial effect that can be achieved by the communication apparatus, the compute device, the computer-readable storage medium, or the computer program product, refer to the beneficial effect of the corresponding solution in the corresponding method provided above. Details are not described herein again.

### BRIEF DESCRIPTION OF DRAWINGS

The following describes specific implementations of this application in detail with reference to accompanying drawings.
FIG. 1 is a diagram of a structure of a chip system in this field;
FIG. 2 is a diagram of a virtual bus in a communication method according to an embodiment of this application;
FIG. 3 is a diagram of an architecture of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a diagram of a structure of a virtual bus window in the communication method in the embodiment in FIG. 5;
FIG. 7 is a schematic flowchart of window occupancy in the communication method in the embodiment in FIG. 5;
FIG. 8 is a diagram of a structure of a virtual bus information table in the communication method in the embodiment in FIG. 5;
FIG. 9 is a diagram of a third communication party change in the communication method in the embodiment in FIG. 5;
FIG. 10 is a diagram of a second virtual bus in the communication method in the embodiment in FIG. 5;
FIG. 11 is a diagram of a proxy module in the communication method in the embodiment in FIG. 5;
FIG. 12 is a schematic flowchart of a communication method according to an embodiment of this application, specifically being a function invoking method;
FIG. 13 is a schematic flowchart of a communication method according to an embodiment of this application, specifically being an information reporting method;
FIG. 14 is a diagram of a structure of a communication apparatus according to an embodiment of this application;
FIG. 15 is a diagram of a structure of a communication apparatus according to an embodiment of this application; and
FIG. 16 is a diagram of a structure of a compute device according to an embodiment of this application.

### DESCRIPTION OF EMBODIMENTS

To make a person skilled in the art understand a concept and an idea of this application more clearly, the following describes this application in detail with reference to specific embodiments. It should be understood that the embodiments provided in this specification are merely a part of all possible embodiments of this application. After reading the specification of this application, a person skilled in the art is capable of making improvements, modifications, or replacements to some or all of the following embodiments, and the improvements, modifications, or replacements also fall within the protection scope of this application.

In this specification, terms "a", "one", and other similar words do not mean that only one of the things exists, but indicate that related descriptions are for only one of the things, and the things may have one or more. In this specification, terms "contain", "include", and other similar words are intended to represent a logical relationship, but cannot be considered to represent a relationship in a spatial structure. For example, "A includes B" means that B belongs to A logically, but does not mean that B is spatially located inside A. In addition, meanings of the terms "contain", "include", and other similar words should be considered being open rather than being closed. For example, "A includes B" means that B belongs to A, but B does not necessarily constitute all of A, and A may further include other elements such as C, D, and E.

In this specification, terms "first", "second", and other similar words are not intended to imply any order, quantity, and importance, but are merely used to distinguish between different elements. In this specification, terms "embodiment", "this embodiment", "an embodiment", and "one embodiment" do not mean that related descriptions are applicable to only one particular embodiment, but mean that the descriptions are further applicable to one or more other embodiments. A person skilled in the art should understand that, in this specification, any description made for an embodiment may be replaced, combined, or combined in another manner with related descriptions in one or more other embodiments, and a new embodiment generated through replacement, combination, or combination in the another manner can be readily figured out by a person skilled in the art, and falls within the protection scope of this application.

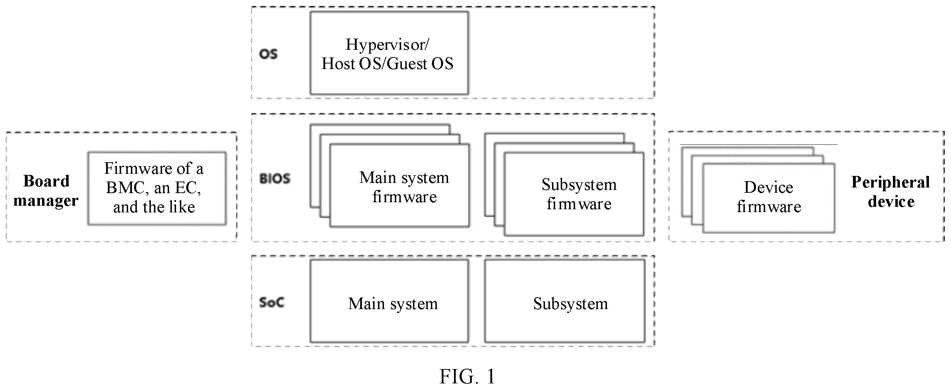

With the development of chip technologies, in the future, there will be increasing scenarios in which a chip includes a plurality of subsystems, and a quantity of subsystems will also increase. Refer to FIG. 1. In FIG. 1, a main system (Main System) is a main system used for computing. An OS (Operating System) is generally an operating system, including a hypervisor (Hypervisor), a host OS (Host OS), a guest OS (Guest OS), and the like. The OS runs on the main system. A subsystem (Subsystem) is a compute unit, other than the main system, that has a capability of independently fetching and executing instructions. The subsystem is usually designed to implement a specific function. Main system firmware (Main System Firmware) is, for example, firmware that runs on the main system in a BIOS. Subsystem firmware (Subsystem Firmware) is, for example, firmware that runs on the subsystem in the BIOS. Firmware of a BMC (Baseboard Management Controller, baseboard management controller), an EC (Embedded Controller, embedded controller), and the like may be firmware or software that runs on the BMC, the EC, and other board management chips. Device firmware may be firmware or software that runs on a peripheral.

There is an information exchange requirement between components or communication parties. From the perspective of a hardware principle, communication may be classified into two types: shared space-based communication and message-based communication. Shared space-based communication means that both communication parties may access a shared space, one party writes information (or referred to as data) into the space, and the other party can read the information. Message-based communication means that both communication parties do not transmit data based on a shared space. Instead, one party sends data to the other party in a form of a message. The message can be used by another function only when the receiver stores the received message locally. For example, in the foregoing chip system, components on a SoC (System on Chip, system on chip) mainly exchange information in a shared space manner. The BMC/EC mainly communicates with the SoC and the peripheral through message-based communication. Interaction between the peripheral and the SoC includes both shared space-based interaction and message-based information exchange.

In technologies in this field, there is a protocol for implementing point-to-point communication between two components (communication parties) based on a shared memory. In a channel mode of this protocol, there is a channel between primary and secondary communication parties. The primary communication party controls the channel, and the secondary communication party is responsible for making a response. At any moment, only the primary communication party can initiate communication, and the secondary communication party cannot actively initiate communication. If mutual communication between two components needs to be implemented, two communication channels need be set up, where the two components serve as primary and secondary communication parties of the two channels. Problems of the technology are as follows: (1) Memory usage is high, and software complexity is high. In this technology, a quantity of supported channels required for pairwise communication between a plurality of components is ${P}_{n}^{2}$, and n is a quantity of components. To be specific, if five components need to satisfy a pairwise communication requirement, a total of 20 channels are required. If the quantity of components increases to 10, 90 channels are required. In addition, each channel is independent, and an increase in the quantity of channels is much greater than an increase in the quantity of components. This is extremely complex for software implementation, and especially for a subsystem with a limited memory space, a memory occupied by a channel for communication is excessively large. (2) When a receiver is uncertain, a traversal attempt is required, resulting in low performance. When an initiator wants to execute a command that is not known to be supported by any component, the initiator needs to query or invoke other components one by one, resulting in low efficiency. (3) The quantity of components cannot be extended during runtime. This technology needs to establish a communication channel between each component and another component in advance. Otherwise, communication is not possible, and extension is not supported during runtime. If a component is not enabled and does not establish a channel with another subsystem during startup, and the component is upgraded and a part of functions are enabled during runtime, the another component cannot normally use a function of firmware of the component because no channel is available, unless the another component is upgraded synchronously and a channel is established with the component.

In another technology in this field, a shared memory is divided into a register configuration area and several communication areas as required, and a reader system and a writer system of each communication area are agreed upon. A register area is used to control generation of an interrupt between systems, and a generation frequency of an interrupt between a plurality of systems is reduced through register configuration, thereby reducing impact of shared memory-based communication on performance of each system. A problem is that a main function of the technology is to improve performance of communication between components by increasing a communication area, which leads to higher shared memory consumption. The technology is not suitable for a component with a limited memory resource.

In some embodiments of this application, shared space occupancy can be reduced, so that a plurality of communication parties consume a less shared space during mutual communication. Communication between the communication parties is more efficient, and a message sent once is visible to the plurality of communication parties. Function extension of the communication party during running is supported, including adding a communication party, deleting a communication party, updating a communication party, and rebooting a communication party.

In some embodiments of this application, a virtual bus based on the shared space is designed. The bus includes a plurality of windows. Each window is a readable and writable storage space with an equal length, and is a minimum unit for performing one information exchange. The windows may be discretely distributed, and storage media may also be different. Use of the window follows occupancy, usage, and release procedures. Occupancy supports a pure software manner and a hardware-assisted manner. A communication party ID is used to distinguish between an occupier (which is also a sender of a message) and a receiver.

In some embodiments of this application, this solution may be applied to communication parties that support a shared space. The shared space includes but is not limited to a DDR SDRAM (Double Data Rate synchronous dynamic random access memory, double data rate synchronous dynamic random access memory), an HBM (High Bandwidth Memory, high bandwidth memory), an SRAM (Static Random Access Memory, static random access memory), and a register. Each communication party participating in communication may be readable and writable.

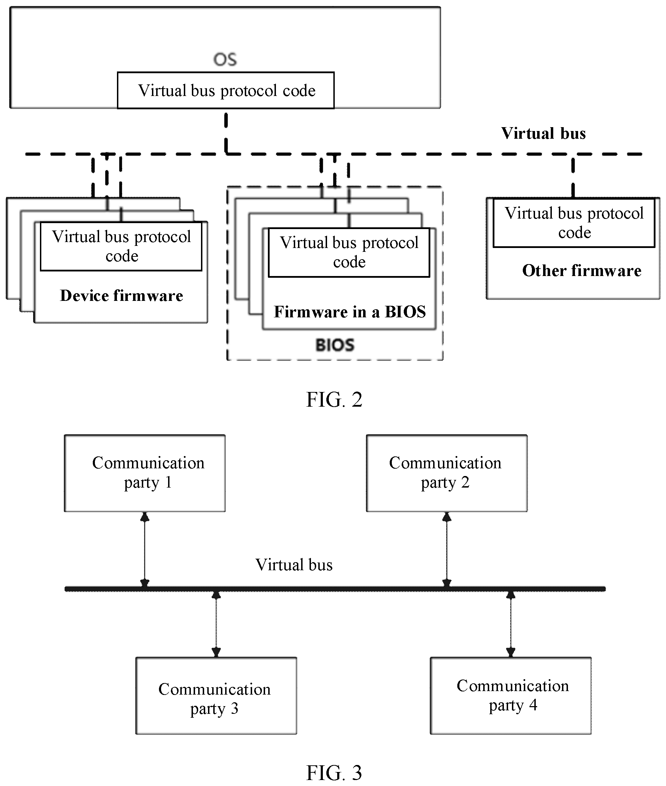

In some embodiments of this application, this solution may be applied to various products, provided that communication parties communicate with each other based on a shared space. The products include but are not limited to a personal computer, a server, a storage device, a base station, a router, a tablet, a mobile phone, and the like. This solution is implemented by using code in a memory, and the code is deployed in each communication party, as shown in FIG. 2.

In some embodiments of this application, information sending and receiving between the plurality of communication parties are implemented through the virtual bus, shared space occupancy is reduced, and one message is supported to be sent to a plurality of communication parties, as shown in FIG. 3.

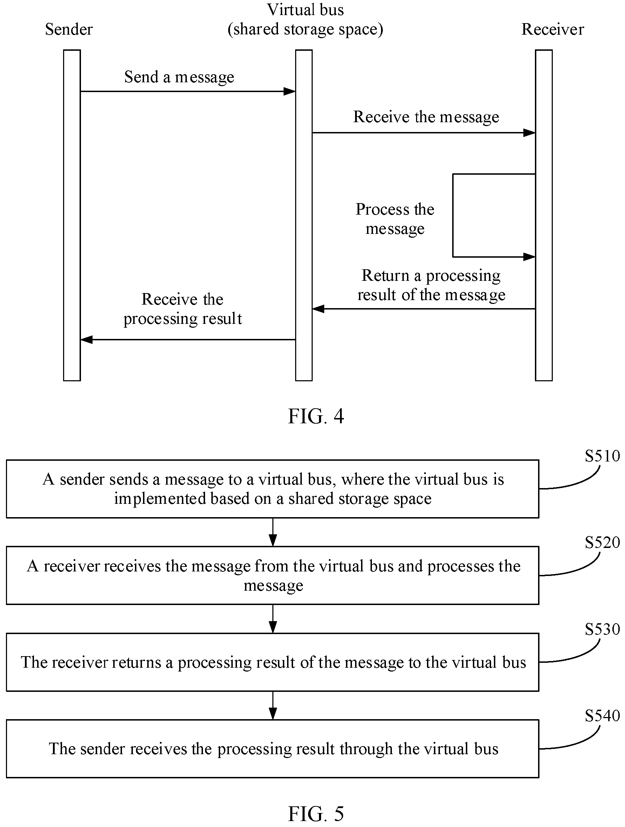

FIG. 4 is a schematic flowchart of a communication method according to an embodiment of this application.

As shown in FIG. 4, there is a shared storage space between a sender and a receiver. To implement convenient and efficient communication between the sender and the receiver, the shared storage space may be set as a virtual bus (in a software manner), and a plurality of possible communication parties are connected in series through one bus. In this way, convenient information exchange between the communication parties is implemented. The virtual bus has a smaller footprint in the shared storage space, and may allow communication between more communication parties, without significantly increasing occupancy of the shared storage space due to an increase in a quantity of communication parties.

In this embodiment, to communicate with the receiver, the sender may send a message to the virtual bus, and the receiver receives the message from the virtual bus in a specific manner. After receiving the message, the receiver may process the message, and after the processing, may return a processing result of the message to the virtual bus. The sender receives the processing result of the message from the virtual bus, indicating that the message is successfully sent and processed.

FIG. 5 is a schematic flowchart of a communication method according to an embodiment of this application.

The communication method in this embodiment is applied to a plurality of communication parties having a shared storage space. The communication method is performed by a sender among the plurality of communication parties, and the plurality of communication parties further include a receiver. According to this embodiment, the communication method includes step S510 to step S540. The following describes the steps in detail.

S510: The sender sends a message to a virtual bus, where the virtual bus is implemented based on the shared storage space.

For example, the virtual bus includes a plurality of windows, and the plurality of windows are obtained by dividing the shared storage space. In this example, to send the message to the virtual bus, the sender may send the message to a first window among the plurality of windows.

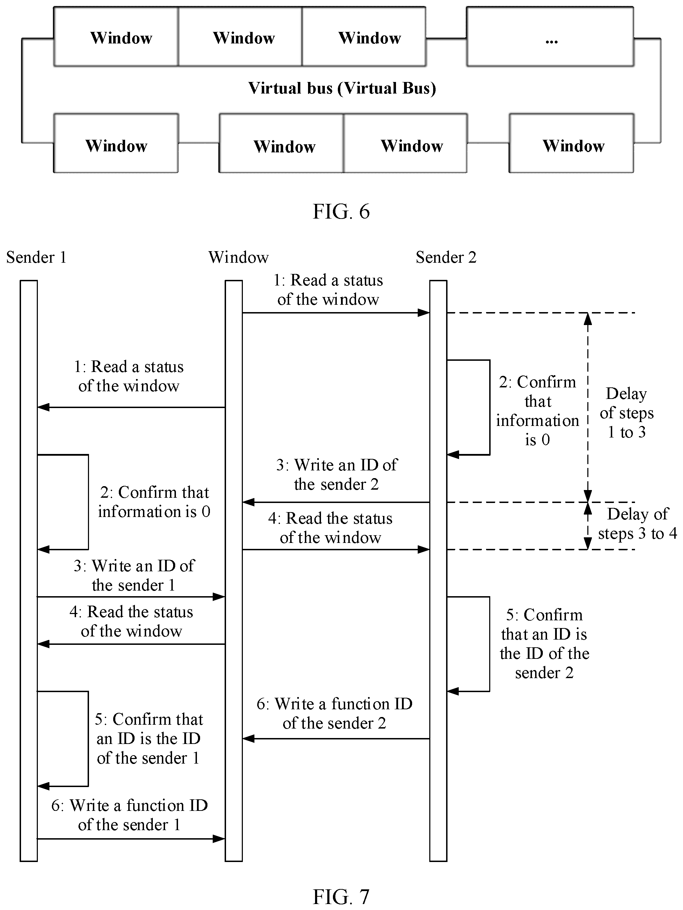

In this example, as shown in FIG. 6, each virtual bus includes one or more windows (window). The window is a minimum unit for performing one message transfer. During actual setting, the windows may be discretely distributed, or may be continuous. Regardless of whether the windows are discrete or continuous, the windows are considered as independent windows, and are combined into a continuous virtual bus by using software. In software implementation, an address or a pointer of each window may be recorded using an array, or windows may be linked together using a linked list. Each virtual bus window includes an ID of a communication party that writes information, an ID of a communication party that receives the information, and content of the information. A basic format definition of the virtual bus window is shown in Table 1. During initialization, it is required that a sender ID and a receiver ID need to be initialized to an invalid state. For example, in this example, 0 indicates the invalid state.

**Table 1**

| Field | Offset address | Length | Description |
|---|---|---|---|
| Version | 0 | 1 | Version number of a data format of this window |
| Message ID | 4 | 4 | Used to distinguish a content type of a message |
| Sender ID | 8 | 4 | Indicates a sender of the message and may also be used to indicate occupancy status of the window. If this field is used for window occupancy, it needs to ensure that the window is in an idle state, in other words, the sender ID is set to 0, before using the window. When this field is written into an ID of the sender, it indicates that the window is occupied. In addition, when the window is released, this field is cleared as a last field. |
| Receiver ID | 12 | 4 | Indicates a receiver of the message. |
| Input data address | 16 | 8 | Start address of a transferred data area. A data format is determined by transferred information. This address may be specified as a physical address to avoid misunderstanding caused by an address translation difference between components on the virtual bus. In addition, it needs to ensure that data has been written into a physical medium instead of a cache (cache). This address may be set to uncache (uncache), or the cache (cache) may be flushed after finishing writing the data. |
| Input data size | 24 | 4 | Length of transferred data |
| Input data checksum | 28 | 4 | Input data checksum |
| Output data address | 32 | 8 | Physical address of a buffer (buffer) for receiving returned data |
| Output data size | 40 | 4 | When this parameter is used as an input parameter, it indicates a size of the buffer (buffer) for receiving the returned data; or when this parameter is used as an output parameter, it indicates an actual size of the data. |
| Output data checksum | 44 | 4 | Output data checksum |
| Returned status | 48 | 4 | Message processing result |
| Reserved | 52 | 12 | Reserved field |

In the virtual bus window, complete information data may not be transferred. Instead, an address and a length of the information data are transferred. The receiver and sender may obtain the specific information data based on the address and the length. In this way, a space required for communication can be reduced. Checksum information may be added to data as required. Memory addresses understood by communication parties on the virtual bus may be different. Therefore, an address transmitted on the virtual bus needs to be a consistent and unambiguous address among all the communication parties. In this example, the physical address is used.

Communication parties on a same virtual bus need to be able to read and write all windows on the virtual bus. During initialization, a group of communication parties that meet the virtual bus window definition (that is, a size of the window format) and plan to use a same virtual bus for communication can jointly read and write a space. The space is divided into windows, and the windows are initialized. A start address of each window is recorded. The virtual bus may be described using an array or a linked list, or in other manner. Selection of the window may be prearranged, or may be dynamically allocated, which depends on specific implementation. One communication party may be responsible for initialization, and then transfer the array, the linked list, or other content that describes the virtual bus to another communication party through other means, or each communication party may agree to perform initialization once, which depends on specific implementation. After the initialization is complete, each communication party obtains description information of the virtual bus, for subsequent use by a function using the virtual bus.

For example, to send the message to the first window among the plurality of windows, the sender may occupy the first window; then, write receiver information and a parameter of the message into the first window; and finally, release the first window.

For example, to occupy the first window, (1) a status of the first window may be read; (2) it may be confirmed that an occupancy field of the first window has not been written with information; (3) an ID of the sender may be written into the occupancy field; (4) the status of the first window may be read again; and (5) when it is confirmed that the information in the occupancy field is the ID of the sender, occupancy is successful. A delay of steps (1) to (3) is less than a delay of steps (4) to (5).

The virtual bus is shared by a plurality of communication parties. Therefore, before writing data into the virtual bus window, a communication party may first confirm that the window currently belongs to the communication party. Use of the window may follow query, occupancy, usage, and release steps. Reading window data is not subject to this restriction. To avoid a window conflict among the plurality of communication parties, mutual exclusion processing is required when applying for a window. A unique ID owned by each communication party may be used as an occupancy credential. When an idle window is detected, the ID of the communication party is written to indicate occupancy. However, due to a sharing feature of the window, a time difference between writing and read-back confirmation may occur, leading to false occupancy. To avoid false occupancy, a specific method needs to be used.

In this example, a pure software window occupancy method may be used. Specifically, when a user detects an idle window, the user writes an ID of the user into the window and delays for a period of time. Then, the user reads back the ID to confirm that the ID is the ID of the user, indicating that occupancy is successful. Otherwise, the occupancy fails. A purpose of the delay is to prevent false occupancy caused by time window misalignment, as shown in FIG. 7.

In FIG. 7, both a sender 1 and a sender 2 have successfully occupied a window, which needs to be avoided. Therefore, delay time between steps 3 to 4 may be at least greater than time required for steps 1 to 3. In this way, time between writing of the ID in step 3 and re-confirmation of the ID in step 4 can be long enough to ensure that no another sender writes an ID of the another sender during this period. If the another sender writes the ID of the another sender during this period, a result of re-confirmation of the ID in step 4 is the ID of the another sender, not an ID of a current sender.

In an embodiment of this application, steps 1, 2, and 3 may be locked to prevent time from exceeding an expectation due to interruption, and the delay is increased between steps 3 and 4.

In an embodiment of this application, a hardware-assisted window occupancy method may be further provided. Specifically, hardware provides an occupancy register for each window, where the register meets a condition that "any value may be written when a value is 0, and only 0 can be written when the value is not 0". In this way, after writing an ID of a user, the user can directly read back to confirm whether the writing is successful without any delay. This method includes the following steps: (1) A read confirmation value is 0; (2) the ID of the user is written; and (3) read-back is performed to confirm that the ID is the ID of the user, indicating that the occupancy is successful.

For example, to occupy the first window, an ID of the sender may be written into an occupancy address of the first window.

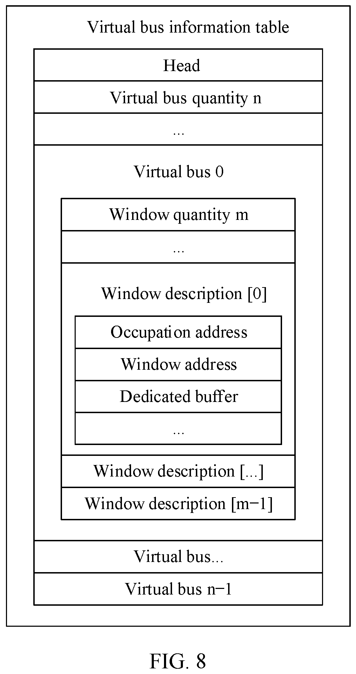

In this example, a virtual bus information table may be added to the virtual bus, as shown in FIG. 8. FIG. 8 is a diagram of a structure of a virtual bus information table in the communication method in the embodiment in FIG. 5.

In this example, a virtual bus usage method description is added to shield a difference brought by software and hardware window occupancy manners to a user. In addition, a dedicated buffer may be configured for the virtual bus to limit a range of a storage space used for crosscommunication party information transfer.

As shown in FIG. 8, the virtual bus information table includes a table header (head). A virtual bus quantity n in the information table indicates that a virtual bus count (Virtual Bus Count) is n, including a virtual bus 0, a virtual bus 1, ..., and a virtual bus n-1. The virtual bus 0 includes windows, and a window quantity m indicates a window count (Window Count) owned by the virtual bus 0, including a window 0, a window 1, ..., and a window m-1. Each window has one window description, and therefore, there are a window description [0], a window description [1], ..., a window description [m-1]. The window description [0] includes information such as an occupancy address, an address, and a dedicated buffer of the window. When occupying a window, a communication party needs to write an ID of the communication party to an occupancy address in the information table, regardless of whether a software or hardware manner is used.

Specifically, the virtual bus information table includes a plurality of pieces of virtual bus information, each virtual bus includes a plurality of windows, and each window is described by one piece of window description (Window Description) information. The window description information includes an occupancy address of the window, a window address, a dedicated buffer of the window, and buffer length information. Occupancy in the software and hardware manners is shielded by using the occupancy address of the window, so that it only needs to determine whether the occupancy address is idle and write an ID of a communication party.

For example, to write receiver information and a parameter of the message into the first window, the parameter of the message may be written into a dedicated buffer of the first window, where the dedicated buffer is used by the receiver to read the parameter of the message.

In this example, the dedicated buffer may be a dedicated buffer in FIG. 8.

Specifically, the virtual bus information table shown in FIG. 8 adds a dedicated buffer to each window, to restrict a spatial range of transferred data. In some embodiments of this application, the window describes only an address and a length of input/output data, and the address is not limited. However, in some scenarios, a user does not want to expose all addresses, but wants to limit the addresses within a specific range. In this case, this extension may be used to limit the addresses. In addition, this extension may be further used to resolve a problem that two communication parties cannot globally access each other's space. This extension also helps improve security and limit an access scope of the two interaction parties. If a buffer space is specified, all data (such as an input data address and an output data address) exchanged between the two parties may be limited within the buffer space. The dedicated buffer of the window is optional, and the dedicated buffer needs to be used if the dedicated buffer exists.

S520: The receiver receives the message from the virtual bus and processes the message.

Specifically, because there are the plurality of communication parties on the virtual bus, each communication party may receive the message through the virtual bus. To confirm that the message is for a communication party, the communication party may determine whether a receiver ID of the message in the virtual bus window is the same as an ID representing the communication party. If the receiver ID of the message in the virtual bus window is the same as the ID representing the communication party, it indicates that a receiver of the message is the communication party, and data may be taken away. Otherwise, it indicates that the receiver is not the communication party, and the communication party may perform skipping and query a next window.

For example, to receive the message from the virtual bus and process the message, the receiver may poll the plurality of windows, and obtain the message when polling the first window among the plurality of windows.

S530: The receiver returns a processing result of the message to the virtual bus.

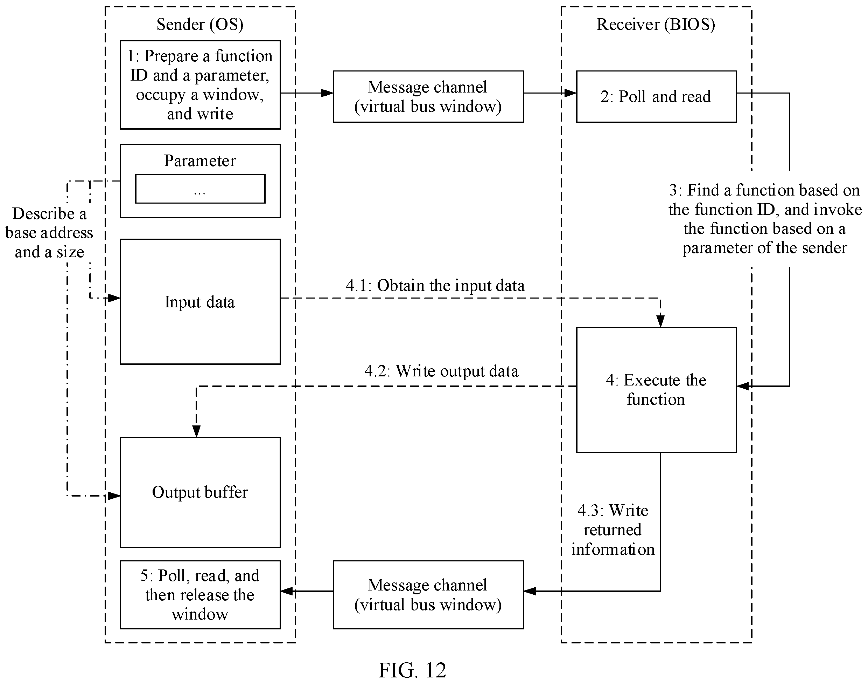

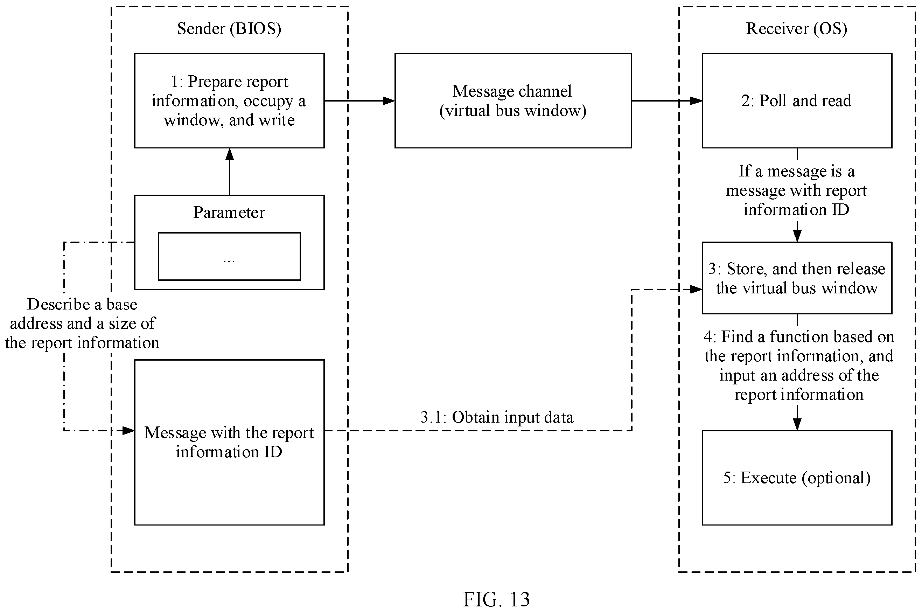

Specifically, the receiver may perform various types of processing on the message, for example, invoke a specific function via the message (refer to the embodiment in FIG. 12), or process report information that needs to be processed and that is sent by the sender (refer to the embodiment in FIG. 13).

S540: The sender receives the processing result through the virtual bus.

For example, the communication method further includes: occupying the first window among the plurality of windows; writing a parameter of a target function into the first window, so that the receiver obtains the parameter of the target function via the first window, determines and executes the target function, and returns execution result information to the first window; and reading the execution result information from the first window.

For example, the communication method further includes: occupying the first window among the plurality of windows; and writing report information and a parameter of the report information into the first window, so that the receiver obtains the report information and the parameter via the first window, determines a processing program based on the parameter, and processes the report information by using the processing program.

For example, the plurality of communication parties further include a third communication party, and the communication method further includes: connecting the third communication party to the virtual bus, to allow the third communication party to communicate with the sender and the receiver.

For example, the plurality of communication parties further include a third communication party, the third communication party communicates with the sender and the receiver through the virtual bus, and the communication method further includes: stopping operation of the third communication party, so that the third communication party no longer communicates with the sender and the receiver through the virtual bus; or updating or rebooting the third communication party, so that the updated or rebooted third communication party communicates with the sender and the receiver through the virtual bus.

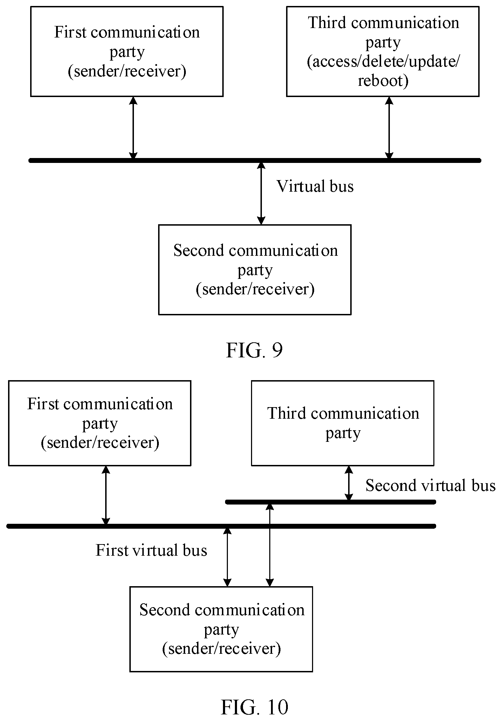

In this example, as shown in FIG. 9, the third communication party is a third communication party other than the sender and the receiver (which may also be referred to as a first communication party and a second communication party). A quantity of communication parties on the virtual bus is not particularly limited, and addition, deletion, update, and reboot of a communication party can be implemented in a simple manner.

Specifically, during initialization, two communication parties in a system exchange information through a virtual bus, complete startup, and are in a service working state. Due to a service requirement, a new communication party needs to be added to the system, and the new communication party needs to invoke functional interfaces of the first communication party and the second communication party. In this case, the third communication party may be directly added, and establish a connection with the same virtual bus. In this way, a service requirement of adding the communication party (communication party extension) is met without changing the first and second communication parties, and another communication party does not need to be updated synchronously, thereby avoiding interruption of an existing normal service.

Specifically, contrary to adding the communication party, it may be found during running that the third communication party is no longer needed, and the third communication party may be allowed to stop working. In this case, the third communication party may be directly stopped, and the another communication party does not need to be processed. In some technologies in this field, if one communication party stops, a channel established between the communication party and another communication party is occupied for a long time, causing a waste. More seriously, if the another communication party sends a message through the channel, an exception may occur because no communication party responds. This is because the technology is a point-to-point communication solution, and a peer end need to make a response by default. If the peer end does not make the response, it is an abnormal case. However, the virtual bus is different. The virtual bus supports a case in which no communication party responds to a message by default. Therefore, the virtual bus can handle a case in which a communication party is deleted.

Specifically, based on features of adding the communication party and deleting the communication party, the third communication party may alternatively be updated or rebooted during running, and the another communication party may not need to be updated or rebooted synchronously. A method of updating and rebooting is equivalent to first deleting and then adding.

For example, the plurality of communication parties further include a third communication party, the virtual bus includes a first virtual bus and a second virtual bus, the sender communicates with the receiver through the first virtual bus, and the sender or the receiver communicates with the third communication party through the second virtual bus.

In this example, as shown in FIG. 10, a plurality of virtual buses may be set as required, and communication parties are grouped and isolated to meet different service requirements. A purpose of the virtual bus is to help the communication parties interact more easily, the virtual bus may be set as required, and a quantity of buses is not limited. In FIG. 10, first and second communication parties may exchange information through the first virtual bus, the second communication party and a third communication party may exchange information through the second virtual bus, and the first communication party and the third communication party cannot perform direct interaction through the virtual bus.

For example, when the sender communicates with the third communication party through the second virtual bus, the sender is provided with a proxy module, to allow the third communication party to communicate with the receiver via the sender; and when the receiver communicates with the third communication party through the second virtual bus, the receiver is provided with a proxy module, to allow the third communication party to communicate with the sender via the receiver.

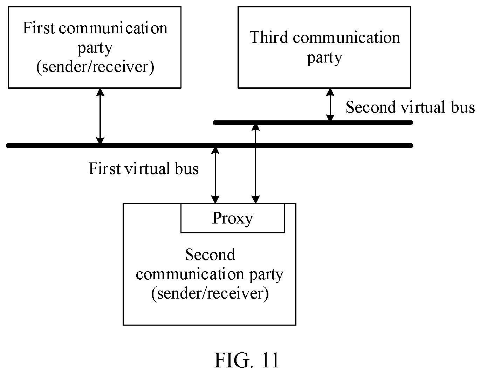

In this example, as shown in FIG. 11, a proxy module may be deployed on a second communication party to implement information exchange between a first communication party and a third communication party. This is because sometimes the third communication party does not directly use the first virtual bus due to a hardware constraint and cannot access a window on the first virtual bus. A function of the proxy on the second communication party is to forward, to the second virtual bus, information that is from the first virtual bus and whose receiver ID is the third communication party, and forward, to the first virtual bus, information that is on the second virtual bus and whose receiver ID is the first communication party. The proxy is also a program deployed in the communication party. The proxy is not limited to being between two virtual buses. The virtual bus and any other communication manner may be implemented via the proxy.

FIG. 12 is a schematic flowchart of a communication method according to an embodiment of this application. In this embodiment, the communication method is specifically a method in which a sender invokes a function of a receiver via a message.

In this embodiment, the sender is, for example, an OS, and the receiver is, for example, a BIOS. Specific steps of the method in this embodiment are as follows:
Step 1: The sender prepares an input parameter (input data), occupies a virtual bus window, and writes a function ID of a target function (corresponding to a number of a function) and parameter information into the window based on a format requirement of the virtual bus window.
Step 2: The receiver polls the virtual bus window and reads the function ID and the parameter information.
Step 3: The receiver locates the specific function based on the function ID, transfers the parameter information, and executes the function.
Step 4: The specific function locates an area in which the sender stores the input parameter based on the parameter information, and reads the input parameter (namely, step 4.1); and an execution function module writes a result into a receiving address specified by the sender (namely, step 4.2), and returns execution result information via the same virtual bus window (namely, step 4.3).
Step 5: The sender polls the virtual bus window for initiating invocation, obtains the execution result, and releases the virtual bus window.

In this embodiment, a parameter module of the sender describes base addresses and sizes of input data and an output buffer, and the receiver can find the corresponding input data and output buffer (data) based on the parameters.

In this embodiment, there is direct (that is, not via the window) data read/write between the sender and the receiver. Specifically, in step 4.1, the execution function module of the receiver directly obtains the input data from a place in which the sender stores the input data. In step 4.2, the execution function module of the receiver directly writes output data generated by the execution function module into the output buffer of the sender.

FIG. 13 is a schematic flowchart of a communication method according to an embodiment of this application. In this embodiment, the communication method is specifically a method in which a sender reports information to a receiver.

In this embodiment, the sender is, for example, a BIOS, and the receiver is, for example, an OS. Specific steps of the method in this embodiment are as follows:
Step 1: The sender prepares report information to be reported, occupies a virtual bus window, and then writes report information ID and parameter information into the window based on a format requirement of the virtual bus window.
Step 2: The receiver polls the virtual bus channel (window) and stores all messages, sent to the receiver, with the report information ID.
Step 3: A message storage program reads a message specified by the parameter information (namely, step 3.1), stores the message to a local space of the receiver for receiving the message with the report information ID, and releases the virtual bus window.
Step 4: Find a specified processing program based on the report information ID, and use a message address as an input parameter for inputting.
Step 5: Process the message.

In this embodiment, a parameter module of the sender describes a base address and a size of the report information, and the receiver may find the corresponding report information based on the parameters.

In this embodiment, there is direct (that is, not via the window) data read/write between the sender and the receiver. Specifically, in step 3.1, the receiver directly obtains input data from a place in which the sender stores the report information (the report information ID and related information).

Based on the foregoing method embodiment in FIG. 5, an embodiment of this application further provides a communication apparatus 1400. A diagram of a structure of the communication apparatus 1400 is shown in FIG. 2. The apparatus is configured to perform the steps in FIG. 5.

According to this embodiment, the communication apparatus 1400 is applied to a plurality of communication parties having a shared storage space. The communication apparatus is disposed in a sender among the plurality of communication parties, and the plurality of communication parties further include a receiver. The communication apparatus 1400 includes a sending module 1410 and a receiving module 1420. The sending module 1410 is configured to send a message to a virtual bus, so that the receiver receives the message through the virtual bus, processes the message, and returns a processing result of the message to the virtual bus, where the virtual bus is implemented based on the shared storage space. The receiving module 1420 is configured to receive the processing result through the virtual bus.

Based on the foregoing method embodiment in FIG. 5, an embodiment of this application further provides a communication apparatus 1500. A diagram of a structure of the communication apparatus 1500 is shown in FIG. 3. The apparatus is configured to perform the steps in FIG. 5.

According to this embodiment, the communication apparatus 1500 is applied to a plurality of communication parties having a shared storage space. The communication apparatus is disposed in a receiver among the plurality of communication parties, and the plurality of communication parties further include a sender. The communication apparatus 1500 includes a receiving module 1510 and a returning module 1520. The receiving module 1510 is configured to receive a message from a virtual bus and process the message, where the message is sent by the sender to the virtual bus, and the virtual bus is implemented based on the shared storage space. The returning module 1520 is configured to return a processing result of the message to the virtual bus.

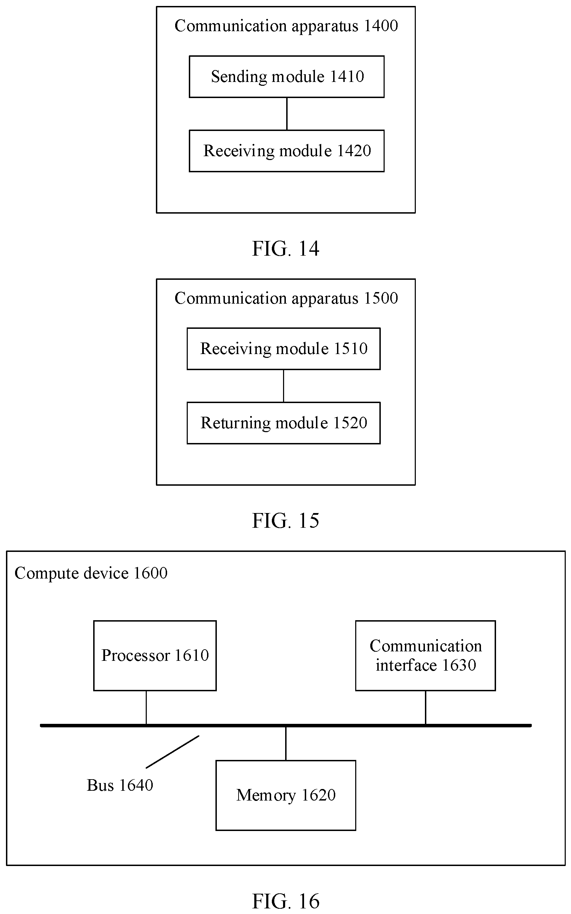

It should be noted that, when the communication apparatus 1400 and the communication apparatus 1500 provided in the embodiments shown in FIG. 14 and FIG. 15 perform the communication method, division into the foregoing function modules is merely used as an example for description. In actual application, the foregoing functions may be allocated to different function modules for implementation based on a requirement. In other words, an internal structure of the apparatus is divided into different function modules, to complete all or a part of the functions described above. In addition, each of the communication apparatus 1400 and the communication apparatus 1500 provided in the foregoing embodiments belongs to a same concept as the method embodiment shown in FIG. 5. For specific implementation processes of the communication apparatus 1400 and the communication apparatus 1500, refer to the method embodiment. Details are not described herein again.

FIG. 16 is a diagram of a hardware structure of a compute device 1600 according to an embodiment of this application.

Refer to FIG. 16. The compute device 1600 includes a processor 1610, a memory 1620, a communication interface 1630, and a bus 1640. The processor 1610, the memory 1620, and the communication interface 1630 are connected to each other through the bus 1640. The processor 1610, the memory 1620, and the communication interface 1630 may alternatively be connected in another connection manner other than the bus 1640.

The memory 1620 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical storage, and a hard disk.

The processor 1610 may be a general-purpose processor, and the general-purpose processor may be a processor that performs specific steps and/or operations by reading and executing content stored in a memory (for example, the memory 1620). For example, the general-purpose processor may be a central processing unit (central processing unit, CPU). The processor 1610 may include at least one circuit, to perform all or some of the steps of the communication method provided in the embodiment shown in FIG. 5.

The communication interface 1630 includes interfaces such as an input/output (input/output, I/O) interface, a physical interface, or a logical interface that are configured to implement interconnection between components inside the compute device 1600, and an interface configured to implement interconnection between the compute device 1600 and another device (for example, another compute device or user equipment). The physical interface may be an Ethernet interface, an optical fiber interface, an ATM interface, or the like. The communication interface 1630 may be externally connected to an input apparatus and an output apparatus. For example, the input apparatus may be a microphone or a microphone array, configured to capture a voice input signal; or may be a communication network connector, configured to receive a captured input signal from a cloud or another device; and may further include, for example, a keyboard or a mouse. The output apparatus may output various information to the outside, including determined distance information, direction information, and the like. The output apparatus may include, for example, a display, a speaker, a printer, a communication network, and a remote output device connected to the communication network.

The bus 1640 may be any type of communication bus, for example, a system bus, configured to implement interconnection between the processor 1610, the memory 1620, and the communication interface 1630.

The foregoing components may be separately disposed on chips that are independent of each other, or at least some or all of the components may be disposed on a same chip. Whether the components are separately disposed on different chips or integrated and disposed on one or more chips usually depends on a requirement of a product design. Specific implementations of the foregoing components are not limited in embodiments of this application.

The compute device 1600 shown in FIG. 16 is merely an example. In an implementation process, the compute device 1600 may further include other components, which are not enumerated in this specification.

An embodiment of this application further provides a computer-readable storage medium. The computer-readable storage medium stores computer program instructions. When the computer program instructions are run by a processor, the processor is enabled to perform the steps, described above in this specification, in the communication methods according to the various embodiments of this application.

The computer-readable storage medium may be any combination of one or more readable media. The readable medium may be a readable signal medium or a readable storage medium. For example, the readable storage medium may include but not limited to an electronic, magnetic, optical, electromagnetic, infrared, or semiconductor system, apparatus, or component, or any combination thereof. More specific examples (a non-exhaustive list) of the readable storage medium include an electrical connection having one or more wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage component, a magnetic storage component, or any suitable combination thereof.

The foregoing describes in detail concepts, principles, and ideas of this application with reference to specific implementations (including embodiments and examples). A person skilled in the art should understand that implementations of this application are more than the foregoing several forms. After reading this application document, a person skilled in the art may make any possible improvement, replacement, or equivalent form to the steps, methods, apparatuses, and parts in the foregoing implementations, and these improvements, replacements, and equivalent forms shall be considered to fall within the scope of this application. The protection scope of this application is subject to the claims.

## Claims

1. A communication method, applied to a plurality of communication parties having a shared storage space, wherein the communication method is performed by a sender among the plurality of communication parties, the plurality of communication parties further comprise a receiver, and the method comprises:
sending a message to a virtual bus, so that the receiver receives the message through the virtual bus, processes the message, and returns a processing result of the message to the virtual bus, wherein the virtual bus is implemented based on the shared storage space; and
receiving the processing result through the virtual bus.

2. The communication method according to claim 1, wherein the virtual bus comprises a plurality of windows, and the plurality of windows are obtained by dividing the shared storage space; and sending the message to the virtual bus comprises:
sending the message to a first window among the plurality of windows, so that the receiver obtains the message via the first window.

3. The communication method according to claim 2, wherein sending the message to the first window among the plurality of windows comprises:
occupying the first window;
writing receiver information and a parameter of the message into the first window; and
releasing the first window.

4. The communication method according to claim 3, wherein occupying the first window comprises:
S1: reading a status of the first window;
S2: confirming that an occupancy field of the first window has not been written with information;
S3: writing an ID of the sender into the occupancy field;
S4: reading the status of the first window again; and
S5: when confirming that the information in the occupancy field is the ID of the sender, occupancy is successful, wherein
a delay of S1 to S3 is less than a delay of S4 to S5.

5. The communication method according to claim 3, wherein occupying the first window comprises:
writing an ID of the sender into an occupancy address of the first window.

6. The communication method according to claim 3, wherein writing the receiver information and the parameter of the message into the first window comprises:
writing the parameter of the message into a dedicated buffer of the first window, wherein the dedicated buffer is used by the receiver to read the parameter of the message.

7. The communication method according to claim 1, wherein the virtual bus comprises a plurality of windows, and the plurality of windows are obtained by dividing the shared storage space; and the method further comprises:
occupying a first window among the plurality of windows;
writing a parameter of a target function into the first window, so that the receiver obtains the parameter of the target function via the first window, determines and executes the target function, and returns execution result information to the first window; and
reading the execution result information from the first window.

8. The communication method according to claim 1, wherein the virtual bus comprises a plurality of windows, and the plurality of windows are obtained by dividing the shared storage space; and the method further comprises:
occupying a first window among the plurality of windows; and
writing report information and a parameter of the report information into the first window, so that the receiver obtains the report information and the parameter via the first window, determines a processing program based on the parameter, and processes the report information by using the processing program.

9. The communication method according to claim 1, wherein the plurality of communication parties further comprise a third communication party, and the method further comprises:
connecting the third communication party to the virtual bus, to allow the third communication party to communicate with the sender and the receiver.

10. The communication method according to claim 1, wherein the plurality of communication parties further comprise a third communication party, the third communication party communicates with the sender and the receiver through the virtual bus, and the method further comprises:
stopping operation of the third communication party, so that the third communication party no longer communicates with the sender and the receiver through the virtual bus; or
updating or rebooting the third communication party, so that the updated or rebooted third communication party communicates with the sender and the receiver through the virtual bus.

11. The communication method according to claim 1, wherein the plurality of communication parties further comprise a third communication party, the virtual bus comprises a first virtual bus and a second virtual bus, the sender communicates with the receiver through the first virtual bus, and the sender or the receiver communicates with the third communication party through the second virtual bus.

12. The communication method according to claim 11, wherein when the sender communicates with the third communication party through the second virtual bus, the sender is provided with a proxy module, to allow the third communication party to communicate with the receiver via the sender; and when the receiver communicates with the third communication party through the second virtual bus, the receiver is provided with a proxy module, to allow the third communication party to communicate with the sender via the receiver.

13. A communication method, applied to a plurality of communication parties having a shared storage space, wherein the communication method is performed by a receiver among the plurality of communication parties, the plurality of communication parties further comprise a sender, and the method comprises:
receiving a message from the virtual bus and processing the message, wherein the message is sent by the sender to the virtual bus, and the virtual bus is implemented based on the shared storage space; and
returning a processing result of the message to the virtual bus.

14. The communication method according to claim 13, wherein the virtual bus comprises a plurality of windows, and the plurality of windows are obtained by dividing the shared storage space; and receiving the message from the virtual bus and processing the message comprises:
polling the plurality of windows, and obtaining the message when polling a first window among the plurality of windows, wherein the sender sends the message to the first window.

15. The communication method according to claim 14, wherein polling the plurality of windows, and obtaining the message when polling the first window among the plurality of windows comprises:
when receiver information in the polled first window is information about the receiver, reading a parameter of the message, wherein the receiver information and the parameter of the message are written by the sender into the window; and
obtaining the message based on the parameter.

16. The communication method according to claim 14, wherein polling the plurality of windows, and obtaining the message when polling the first window among the plurality of windows comprises:
when receiver information in the polled first window is information about the receiver, reading a parameter of the message from a dedicated buffer of the first window, wherein the parameter of the message is written by the sender into the dedicated buffer; and
obtaining the message based on the parameter.

17. The communication method according to claim 13, wherein the virtual bus comprises a plurality of windows, and the plurality of windows are obtained by dividing the shared storage space; and the method further comprises:
obtaining a parameter of a target function via a first window among the plurality of windows, wherein the sender writes the parameter of the target function into the first window;
determining and executing the target function based on the parameter of the target function; and
returning execution result information to the first window, so that the sender reads the execution result information from the first window.

18. The communication method according to claim 13, wherein the virtual bus comprises a plurality of windows, and the plurality of windows are obtained by dividing the shared storage space; and the method further comprises:
obtaining report information and a parameter of the report information via a first window among the plurality of windows, wherein the sender writes the report information and the parameter into the first window;
determining a processing program based on the parameter; and
processing the report information by using the processing program.

19. The communication method according to claim 13, wherein the plurality of communication parties further comprise a third communication party, and the method further comprises:
connecting the third communication party to the virtual bus, to allow the third communication party to communicate with the sender and the receiver.

20. The communication method according to claim 13, wherein the plurality of communication parties further comprise a third communication party, the third communication party communicates with the sender and the receiver through the virtual bus, and the method further comprises:
stopping operation of the third communication party, so that the third communication party no longer communicates with the sender and the receiver through the virtual bus; or
updating or rebooting the third communication party, so that the updated or rebooted third communication party communicates with the sender and the receiver through the virtual bus.

21. The communication method according to claim 13, wherein the plurality of communication parties further comprise a third communication party, the virtual bus comprises a first virtual bus and a second virtual bus, the sender communicates with the receiver through the first virtual bus, and the sender or the receiver communicates with the third communication party through the second virtual bus.

22. The communication method according to claim 21, wherein when the sender communicates with the third communication party through the second virtual bus, the sender is provided with a proxy module, to allow the third communication party to communicate with the receiver via the sender; and when the receiver communicates with the third communication party through the second virtual bus, the receiver is provided with a proxy module, to allow the third communication party to communicate with the sender via the receiver.

23. A communication apparatus, applied to a plurality of communication parties having a shared storage space, wherein the communication apparatus is disposed in a sender among the plurality of communication parties, the plurality of communication parties further comprise a receiver, and the apparatus comprises:
a sending module, configured to send a message to a virtual bus, so that the receiver receives the message through the virtual bus, processes the message, and returns a processing result of the message to the virtual bus, wherein the virtual bus is implemented based on the shared storage space; and
a receiving module, configured to receive the processing result through the virtual bus.

24. A communication apparatus, applied to a plurality of communication parties having a shared storage space, wherein the communication apparatus is disposed in a receiver among the plurality of communication parties, the plurality of communication parties further comprise a sender, and the apparatus comprises:
a receiving module, configured to receive a message from the virtual bus and process the message, wherein the message is sent by the sender to the virtual bus, and the virtual bus is implemented based on the shared storage space; and
a returning module, configured to return a processing result of the message to the virtual bus.

25. A compute device, wherein the compute device comprises a processor and a memory, and the processor is configured to execute a computer program stored in the memory to implement the communication method according to any one of claims 1 to 22.

26. A computer-readable storage medium, wherein the computer-readable storage medium stores a computer program, and the computer program is used to perform the communication method according to any one of claims 1 to 22.
